# EUROPÄISCHE PATENTSCHRIFT

(11) **EP 1 201 963 B1**
(45) Veröffentlichungstag und Bekanntmachung des Hinweises auf die Patenterteilung: **06.08.2003**
(21) Anmeldenummer: 01125192.3
(22) Anmeldetag: 24.10.2001
(51) Int. Cl.: F16G 13/16

(54) **Energieführungskette**
Supporting chain for energy carriers
Chaîne porteuse pour lignes de transport d'énergie

(30) Priorität: 28.10.2000 DE 10053635
(43) Veröffentlichungstag der Anmeldung: 02.05.2002
(73) Patentinhaber: ekd gelenkrohr GmbH, 40699 Erkrath (DE)
(72) Erfinder: Klein, Ernst, Dipl.-Ing., 40625 Düsseldorf (DE)
(74) Vertreter: Albrecht, Rainer Harald, Dr.-Ing.

(56) Entgegenhaltungen:
- DE-A- 1 424 311
- DE-B- 1 131 964
- US-A- 4 129 277
- PATENT ABSTRACTS OF JAPAN vol. 009, no. 282 (M-428), 9. November 1985 (1985-11-09) -& JP 60 125441 A (MATSUSHITA DENKI SANGYO KK), 4. Juli 1985 (1985-07-04)

## Beschreibung

Die Erfindung betrifft eine Energieführungskette, die unter Bildung eines Obertrums, eines Untertrums und eines diese verbindenden Umlenkbereiches eine feste Anschlussstelle mit einer beweglichen Anschlussstelle verbindet und mit Führungsrollen ausgerüstet ist.

Eine Energieführungskette des beschriebenen Aufbaus ist aus DE-AS 1 131 964 bekannt. Die Führungsrollen dienen der Abstützung des Obertrums und laufen auf seitlichen Stützschienen, die einzelne Aussparungen zum Durchtreten der Führungsrollen an der jeweiligen Umlenkstelle der Energieführungskette aufweisen. Die in Kettenlängsrichtung in Abständen angeordneten Führungsrollen und die ihnen zugeordneten Aussparungen der Stützschienen, durch welche die Führungsrollen in eine Ablagerinne eintauchen, müssen stets so aufeinander abgestimmt werden, dass sich nicht gleichzeitig mehrere Rollen über Aussparungen befinden. Bei langen Energieführungsketten ist dieses Kriterium nur schwer einzuhalten. Problematisch ist ferner, dass die Energieführungskette sich mit zunehmender Betriebsdauer und/oder aufgrund von Witterungseinflüssen längt und die Aussparungen in den Stützschienen dann nicht mehr ausreichend auf die Bahnkurven der Führungsrollen im Umlenkbereich abgestimmt sind. Bei unzureichender Abstimmung ist ein ordnungsgemäßer Betrieb der Energieführungskette nicht möglich. Die in den Stützschienen vorgesehenen Aussparungen zum Durchtreten der Führungsrollen stellen ferner bei einer Fahrbewegung des Obertrums Unebenheiten dar, die von allen, nicht im Umlenkbereich befindlichen Führungsrollen, überfahren werden müssen. Die konstruktionsbedingten Unebenheiten stellen einen erheblichen Rollwiderstand dar, verursachen Verschleiß und Laufunruhe und können insbesondere bei einer Schubbewegung langer Ketten Betriebsstörungen verursachen. Die bekannte Ausführung hat aufgrund der beschriebenen konstruktionsbedingten Nachteile keinen Eingang in die Praxis gefunden.

Es ist ferner bekannt, zwischen dem Obertrum und dem Untertrum einer Energieführungskette einen Stützwagen anzuordnen, auf dem an Kettenglieder seitlich angeschlossene Führungsrollen aufliegen (DE 1 424 311). Ausführungen mit einem Stützwagen gewährleisten zwar eine reibungsarme, gleichmäßige Führung und damit große Laufruhe, doch sind der konstruktive Aufwand und damit die Kosten für lange Verfahrwege hoch. Ferner sind Stützwagen nur einsetzbar, wenn sie an beiden Enden von der Energieführungskette umschlungen sind, was zu einem erheblichen konstruktiven und kostenmäßigen Mehraufwand führt.

Zur Unterstützung des Obertrums an einer Energieführungskette ist es auch bekannt, entlang des Verfahrweges seitlich verschwenkbare Stützrollen anzuordnen (US 4 129 277). Die Stützrollen sind an stationär angeordneten, verschwenkbaren Stützböcken gelagert. Der Obertrum der Energieführungskette hängt zwischen den längs des Verfahrweges angeordneten Stützböcken girlandenartig durch. Eine ruhige, reibungsarme Fahrbewegung ist nicht möglich. Bei Schubbewegungen langer Energieführungsketten besteht die Gefahr betrieblicher Störungen.

Der Erfindung liegt die Aufgabe zugrunde, eine Energieführungskette anzugeben, bei der ein ruhiger, reibungsarmer Lauf auch bei langen Fahrwegen gewährleistet ist.

Ausgehend von einer Energieführungskette des eingangs beschriebenen Aufbaus wird die Aufgabe erfindungsgemäß dadurch gelöst, dass die Führungsrollen im Obertrum auf durchgehenden, ortsfesten Laufflächen abrollen und dass die Spurbreite zwischen den auf der linken und der rechten Kettenseite angeordneten Führungsrollen während der Fahrbewegung der Kette veränderbar ist. Im Obertrum der Kette ist die Spurbreite zwischen den Führungsrollen größer als im Untertrum. Die Führungsrollen sind verstellbeweglich an Kettenglieder der Energieführungskette angeschlossen und werden nach innen bewegt, wenn ein zugeordneter Abschnitt des Obertrums im Zuge der Fahrbewegung in einen Raum zwischen den Laufflächen, z. B. in eine Ablagerinne eintaucht. Als Änderung der Spurbreite soll im Rahmen der Erfindung jede die Position der Führungsrollen verändernde Stellbewegung verstanden werden, die dafür sorgt, dass die mit den Führungsrollen ausgerüsteten Kettenglieder in den Raum zwischen den ortsfesten Laufflächen eintauchen können. Umfasst sind z. B. lineare Stellbewegungen, Schwenkbewegungen um vertikale oder horizontale Schwenkachsen sowie Konstruktionen aus translatorischen Stellbewegungen und Schwenkbewegungen.

Gemäß einer bevorzugten Ausführungsform der Erfindung ist der Vertikalabstand der Laufflächen zur Führung des Obertrums von der Ablagefläche für den Untertrum kleiner als der Durchmesser des Umlenkbogens im Umlenkbereich, so dass die Führungsrollen bei einem Einlauf der Kette in den Umlenkbereich von den Laufflächen abheben oder zumindest gewichtsentlastet sind. An die Führungsrollen sind Einrichtungen angeschlossen, die eine die Spurbreite ändernde Stellbewegung der von den Laufflächen abgehobenen Führungsrollen bewirken.

Für die konstruktive Ausgestaltung der erfindungsgemäßen Lehre bieten sich verschiedene Möglichkeiten an. Eine bevorzugte konstruktive Ausgestaltung sieht vor, dass die Führungsrollen quer zur Kettenlängsrichtung beweglich an Kettengliedern angeordnet sind und dass in Laufrichtung vor den Führungsrollen keilförmige Gleitelemente vorgesehen sind, die bei einer die Ablagelänge des Untertrums vergrößernden Fahrbewegung der Kette in eine die Kette führende Ablagerinne eintauchen und durch einen Anschlag an Seitenflächen der Ablagerinne die Führungsrollen nach innen führen. Gemäß einer anderen, ebenfalls unter die erfindungsgemäße Lehre fallenden Ausführung sind den Führungsrollen elektrisch oder pneumatisch betriebene Stelleinrichtungen zugeordnet, die bei einer Fahrbewegung der Kette durch Kontaktschalter oder berührungslos arbeitende Schalteinrichtungen betätigbar sind. Die Schaltelemente können an Kettengliedern befestigt sein und sprechen an, sobald das betreffende Kettenglied in den Bereich einer Ablagerinne bzw. den Raum zwischen den ortsfesten Laufflächen gelangt. Eine weitere, unter die erfindungsgemäße Lehre fallende Ausführung sieht vor, dass den Führungsrollen Stelleinrichtungen zugeordnet sind, die an Kettengliedern angeordnet sind und bei einer Krümmung der Kette eine die Spurbreite verändernde Stellbewegung zugeordneter Führungsrollen auslösen. Die Stellelemente können als mechanische Einrichtungen oder als elektromechanische Einrichtungen ausgebildet sein.

Bei allen zuvor beschriebenen Ausführungen sind die Führungsrollen zweckmäßig an Halterungen angeschlossen, die Rückstellelemente, z. B. Rückstellfedern, aufweisen. Die Führungsrollen sind beispielsweise auf Achsen angeordnet, die in Lagerbohrungen der Kettenglieder gegen die Wirkung der Rückstellelemente verschiebbar geführt sind. Ferner können die Führungsrollen an Schwenkarmen angeordnet sein, die an den Rückstellelementen abgestützt sind.

Es ist zweckmäßig, den Obertrum an der Ablagerinne gegen seitlichen Versatz zu führen. Gemäß einer bevorzugten Ausführung weisen die ortsfesten Laufflächen ein Profil zur seitlichen Führung der Führungsrollen auf. Die an die Energieführungskette angeschlossenen Führungsrollen weisen je nach Ausführung der Laufflächen glatte oder profilierte Auflageflächen aus Metall oder Kunststoff auf.

Im Folgenden wird die Erfindung anhand einer lediglich ein Ausführungsbeispiel darstellenden Zeichnung erläutert. Es zeigen schematisch
- Fig. 1: die Seitenansicht einer erfindungsgemäßen Energieführungskette,
- Fig. 2: den Ausschnitt X aus Fig. 1 in einer gegenüber Fig. 1 vergrößerten Darstellung,
- Fig. 3: einen Querschnitt durch die erfindungsgemäße Energieführungskette,
- Fig. 4: eine Draufsicht auf den Gegenstand der Fig. 3,
- Fig. 5: ausschnittsweise eine weitere Ausgestaltung des erfindungsgemäßen Gegenstandes.

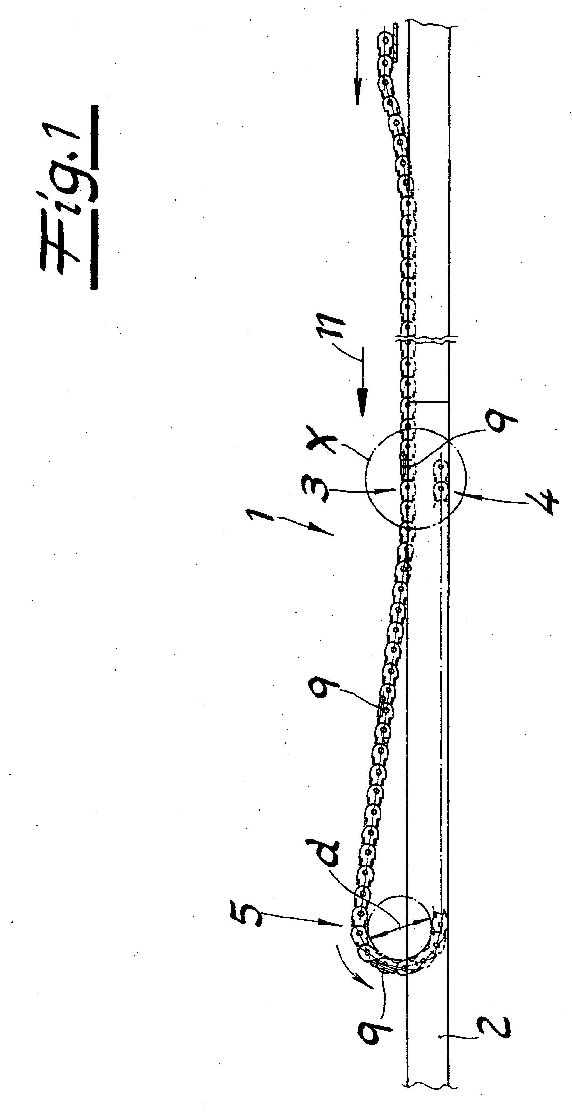

Die Fig. 1 zeigt eine Energieführungskette 1, die in einer Ablagerinne 2 unter Bildung eines Obertrums 3, eines Untertrums 4 und eines diese verbindenden Umlenkbereiches 5 geführt ist und mit Führungsrollen 6 ausgerüstet ist. Sie dient zur Führung von flexiblen hydraulischen, pneumatischen elektrischen oder sonstigen Versorgungsleitungen an beweglichen Energieabnehmern und ist an ihrem untertrumseitigen Ende fest angeschlossen sowie an ihrem obertrumseitigen Ende an ein nicht dargestelltes, längs der Ablagerinne 2 verfahrbares Gerät angeschlossen. Die Energieführungskette 1 ist für lange Verfahrwege eingerichtet.

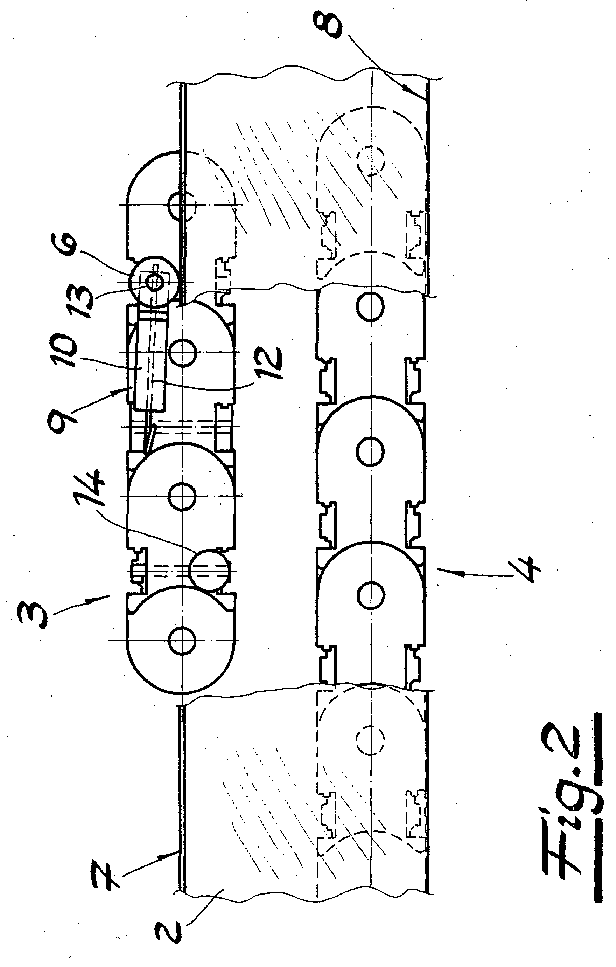

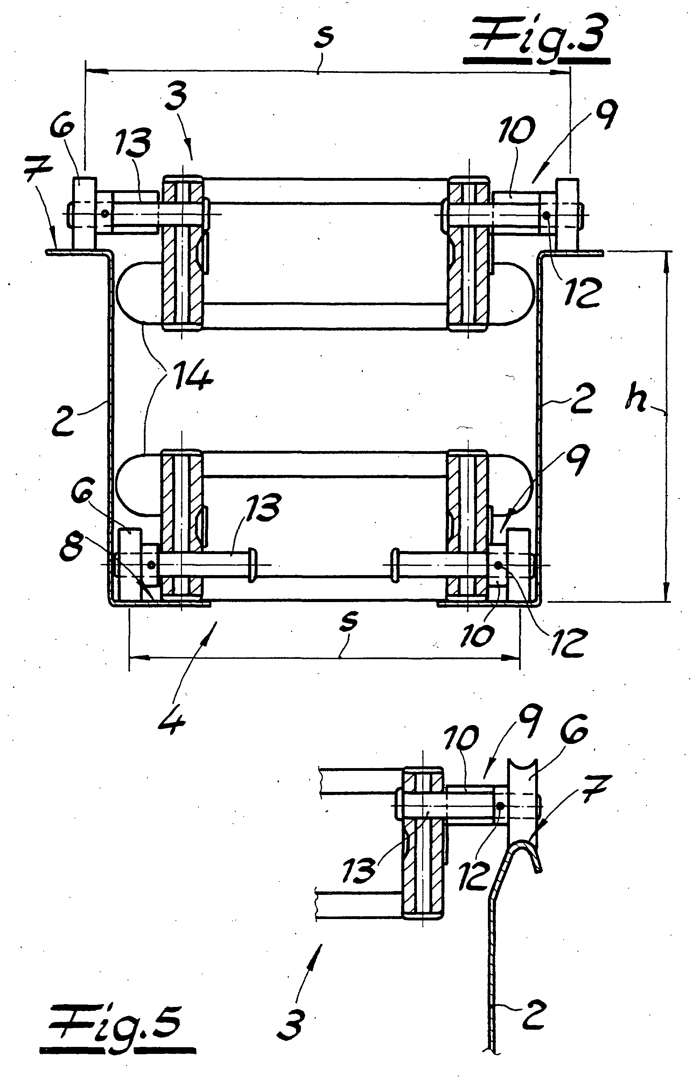

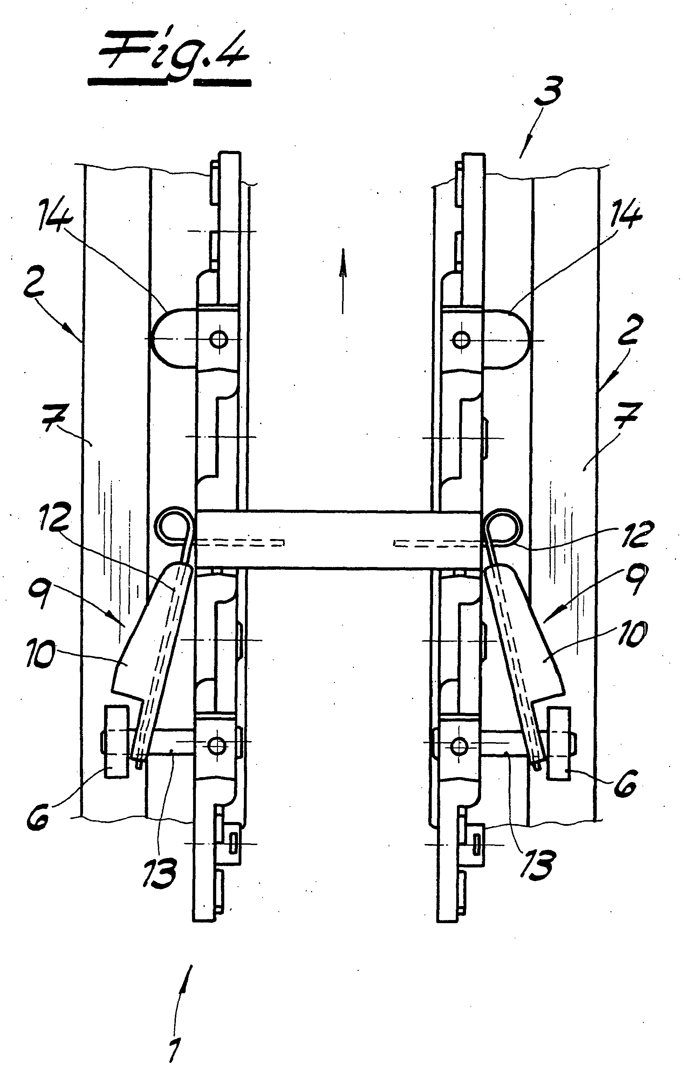

Einer vergleichenden Betrachtung insbesondere der Fig. 2 und 3 entnimmt man, dass die Führungsrollen 6 im Obertrum 3 auf durchgehenden, ortsfesten Laufflächen 7 abrollen und dass die Spurbreite s zwischen den auf der linken und rechten Kettenseite angeordneten Führungsrollen 6 während der Fahrbewegung der Kette veränderbar ist. Im Obertrum 3 ist die Spurbreite s größer als in dem in der Ablagerinne 2 abgelegten Untertrum 4. In den Ausführungsbeispielen sind die Führungsrollen 6 an der linken und rechten Seite der Kette gegenüberliegend angeordnet. Im Rahmen der Erfindung liegt es auch, dass die auf der linken und rechten Kettenseite angeordneten Führungsrollen 6 in Längsrichtung zueinander versetzt an unterschiedlichen Kettengliedern angeordnet sind.

Der Vertikalabstand h der Laufflächen 7 zur Führung des Obertrums 3 von der Ablagefläche 8 für den Untertrum 4 ist kleiner als der Durchmesser d des Umlenkbogens im Umlenkbereich, so dass die Führungsrollen 6 bei einem Einlauf der Kette in den Umlenkbereich 5 von den Laufflächen 7 abheben oder zumindest gewichtsentlastet sind (Fig. 1). An die Führungsrollen 6 sind Einrichtungen 9 angeschlossen, die eine die Spurbreite s ändernde Stellbewegung der von den Laufflächen 7 abgehobenen Führungsrollen 6 bewirken. Eine konstruktiv besonders einfache und insofern bevorzugte Ausführung dieser Einrichtungen 9 ist in Fig. 4 dargestellt. Der Fig. 4 entnimmt man, dass die Führungsrollen 6 quer zur Kettenlängsrichtung beweglich an Kettengliedern angeordnet sind und dass in Laufrichtung vor den Führungsrollen 6 keilförmige Gleitelemente 10 vorgesehen sind. Nach einer in Fig. 1 durch einen Richtungspfeil 11 angegebenen, die Ablagelänge des Untertrums 4 vergrößernden Fahrbewegung der Kette tauchen die Gleitelemente 10 mit ihrer keilförmigen Fläche voran in die Ablagerinne 2 ein und führen durch einen Anschlag an Seitenflächen der Ablagerinne 2 die Führungsrollen 6 nach innen. Im Untertrum 4 liegen die keilförmigen Gleitelemente 10 unter der Wirkung einer als Rückstellelement wirkenden Rückstellfeder 12 an den Seitenflächen der Ablagerinne 2 an, wie dies im unteren Teil der Fig. 3 dargestellt ist. Im Ausführungsbeispiel sind die Führungsrollen 6 auf Achsen 13 angeordnet, die in Lagerbohrungen der Kettenglieder gegen die Wirkung der Rückstellfeder 12 verschiebbar geführt sind. Die Führungsrollen 6 können jedoch auch an Schwenkarmen angeordnet sein, die jeweils an einem Rückstellelement, z. B. einer Rückstellfeder, abgestützt sind.

Die Führungsrollen 6 bestehen aus Metall oder Kunststoff und weisen bei der in den Fig. 2 bis 4 dargestellten Ausführung glatte Auflageflächen auf. Zur seitlichen Führung der Energieführungskette 1 in der Ablagerinne 2 sind an einzelne Kettenglieder seitliche Gleitelemente 14 angeschlossen, die den Abstand zwischen den Seitenwänden der Ablagerinne 2 und den Kettengliedern überbrücken.

Bei der in Fig. 5 dargestellten Ausführung weisen die ortsfesten Laufflächen 7 ein Profil zur seitlichen Führung der Führungsrollen 6 auf. Die Auflagefläche der Führungsrollen 6 ist an das Profil der Laufflächen 7 angepasst. Bei dieser Ausführung sind seitliche Gleitelemente zur Führung der Energieführungskette in der Ablagerinne 2 nicht mehr erforderlich.

## Patentansprüche

1. Energieführungskette, die unter Bildung eines Obertrums (3), eines Untertrums (4) und eines diese verbindenden Umlenkbereichs (5) eine feste Anschlussstelle mit einer beweglichen Anschlussstelle verbindet und mit Führungsrollen (6) ausgerüstet ist, **dadurch gekennzeichnet, dass** die Führungsrollen (6) im Obertrum (3) auf durchgehenden, ortsfesten Laufflächen (7) abrollen und dass die Spurbreite (s) zwischen den auf der linken und rechten Kettenseite angeordneten Führungsrollen (6) während der Fahrbewegung der Kette veränderbar ist.

2. Energieführungskette nach Anspruch 1, **dadurch gekennzeichnet, dass** der Vertikalabstand (h) der Laufflächen (7) zur Führung des Obertrums (4) von der Ablagefläche (8) für den. Untertrum (4) kleiner ist als der Durchmesser (d) des Umlenkbogens im Umlenkbereich (5), so dass die Führungsrollen (6) bei einem Einlauf der Kette in den Umlenkbereich (5) von den Laufflächen (7) abheben oder zumindest gewichtsentlastet sind, und dass die Führungsrollen (6) an Einrichtungen (9) angeschlossen sind, die eine die Spurbreite (s) ändernde Stellbewegung der von den Laufflächen (7) abgehobenen Führungsrollen (6) bewirken.

3. Energieführungskette nach Anspruch 1 oder 2, **dadurch gekennzeichnet, dass** die Führungsrollen (6) quer zur Kettenlängsrichtung beweglich an Kettengliedern angeordnet sind und dass in Laufrichtung vor den Führungsrollen (6) keilförmige Gleitelemente (10) vorgesehen sind, die bei einer die Ablagelänge des Untertrums (4) vergrößernden Fahrbewegung der Kette in eine die Kette führende Ablagerinne (2) eintauchen und durch einen Anschlag an Seitenflächen der Ablagerinne (2) die Führungsrollen (6) nach innen führen.

4. Energieführungskette nach Anspruch 1 oder 2, **dadurch gekennzeichnet, dass** den Führungsrollen (6) elektrisch oder pneumatisch betriebene Stelleinrichtungen zugeordnet sind, die bei einer Fahrbewegung der Kette durch Kontaktschalter oder berührungslos arbeitende Schalteinrichtungen betätigbar sind.

5. Energieführungskette nach Anspruch 1 oder 2, **dadurch gekennzeichnet, dass** den Führungsrollen (6) Stelleinrichtungen zugeordnet sind, die an Kettengliedern angeordnet sind und bei einer Krümmung der Kette eine die Spurbreite (s) verändernde Stellbewegung zugeordneter Führungsrollen (6) auslösen.

6. Energieführungskette nach einem der Ansprüche 1 bis 5, **dadurch gekennzeichnet, dass** die Führungsrollen (6) an Halterungen angeschlossen sind, die Rückstellelemente (12) aufweisen.

7. Energieführungskette nach einem der Ansprüche 1 bis 6, **dadurch gekennzeichnet, dass** die Führungsrollen (6) auf Achsen (13) angeordnet sind, die in Lagerbohrungen der Kettenglieder gegen die Wirkung eines Rückstellelementes (12) verschiebbar geführt sind.

8. Energieführungskette nach einem der Ansprüche 1 bis 6, **dadurch gekennzeichnet, dass** die Führungsrollen (6) an Schwenkarmen angeordnet sind, die an Rückstellelementen (12) abgestützt sind.

9. Energieführungskette nach einem der Ansprüche 1 bis 8, **dadurch gekennzeichnet, dass** die ortsfesten Laufflächen (7) ein Profil zur seitlichen Führung der Führungsrollen (6) aufweisen.

10. Energieführungskette nach einem der Ansprüche 1 bis 9, **dadurch gekennzeichnet, dass** die Führungsrollen (6) glatte oder profilierte Auflageflächen aus Metall oder Kunststoff aufweisen.

## Claims

1. An energy-carrying chain which connects a fixed connection point to a movable connection point with the formation of an upper run (3), a lower run (4), and a deflection region (5) connecting said runs, and which is equipped with guide rollers (6), **characterised in that** in the upper run (3) the guide rollers (6) roll on continuous, fixed running faces (7), and that the track width (s) between the guide rollers (6) which are disposed on the left and right sides of the chain can be varied during the travelling movement of the chain.

2. An energy-carrying chain according to claim 1, **characterised in that** the vertical distance (h) of the running faces (7) for guiding the upper run (4) from the placement face (8) for the lower run (4) is less than the diameter (d) of the deflection arc in the deflection region (5), so that when the chain runs into the deflection region (5) the guide rollers (6) are raised from the running faces (7) or are at least relieved from weight, and that the guide rollers (6) are attached to devices (9) which effect an adjusting movement of the guide rollers (6) which are raised from the running faces (7), which alters the track width (s).

3. An energy-carrying chain according to claims 1 or 2, **characterised in that** the guide rollers (6) are disposed on chain links so that they can move transversely to the longitudinal direction of the chain, and that wedge-shaped sliding elements (10) are provided in front of the guide rollers (6) in the direction of movement, and during a travelling movement of the chain which increases the placement length of the lower run (4) said sliding elements enter a placement channel (2) which guides the chain and guide the guide rollers (6) inwards by contact with side faces of the placement channel (2).

4. An energy-carrying chain according to claims 1 or 2, **characterised in that** electrically or pneumatically operated adjusting devices are associated with the guide rollers (6) and can be actuated during a travelling movement of the chain by contact switches or by contactless switching devices.

5. An energy-carrying chain according to claims 1 or 2, **characterised in that** adjusting devices are associated with the guide rollers (6), which adjusting devices are disposed on chain links and when there is curvature of the chain initiate an adjusting movement, which alters the track width (s), of associated guide rollers (6).

6. An energy-carrying chain according to any one of claims 1 to 5, **characterised in that** the guide rollers (6) are attached to holding devices which comprise readjusting elements (12).

7. An energy-carrying chain according to any one of claims 1 to 6, **characterised in that** the guide rollers (6) are disposed on axles (13) which are guided in bearing bores in the chain links so that they can be displaced against the action of a readjusting element (12).

8. An energy-carrying chain according to any one of claims 1 to 6, **characterised in that** the guide rollers (6) are disposed on swivelling arms which are supported on readjusting elements (12).

9. An energy-carrying chain according to any one of claims 1 to 8, **characterised in that** the fixed running faces (7) have a profile for the lateral guidance of the guide rollers (6).

10. An energy-carrying chain according to any one of claims 1 to 9, **characterised in that** the guide rollers (6) have plain or profiled contact faces made of metal or plastics.

## Revendications

1. Chaîne pour transport d'énergie qui, en formant un brin supérieur (3), un brin inférieur (4) et une zone de renvoi (5) reliant ceux-ci, relie un point de raccordement fixe à un point de raccordement mobile et est équipée de galets de guidage (6), **caractérisée en ce que** les galets de guidage (6) roulent, dans le brin supérieur (3), sur des surfaces de roulement (7) fixes continues, et **en ce que** la largeur de voie (s) entre les galets de guidage (6) disposés sur le côté gauche et le côté droit de la chaîne est variable pendant le mouvement de circulation de la chaîne.

2. Chaîne pour transport d'énergie selon la revendication 1, **caractérisée en ce que** la distance verticale (h) des surfaces de roulement (7) pour le guidage du brin supérieur (4), par rapport à la surface de réception (8) du brin inférieur (4), est inférieure au diamètre (d) de l'arc de renvoi dans la zone de renvoi (5), ce qui fait que les galets de guidage (6) se soulèvent des surfaces de roulement (7) ou sont au moins déchargés, lorsque la chaîne entre dans la zone de renvoi, et **en ce que** les galets de guidage (6) sont raccordés à des dispositifs (9) qui provoquent un mouvement de réglage, modifiant la largeur de voie (s), des galets de guidage (6) soulevés des surfaces de roulement (7).

3. Chaîne pour transport d'énergie selon la revendication 1 ou 2, **caractérisée en ce que** les galets de guidage (6) sont disposés mobiles sur des maillons de chaîne, transversalement à la direction longitudinale de la chaîne, et **en ce que** devant les galets de guidage (6), dans le sens de défilement, sont prévus des éléments de glissement (10) en forme de coin qui, en cas de mouvements de défilement de la chaîne augmentant la longueur de réception du brin inférieur (4), pénètrent dans une goulotte de réception (2) guidant la chaîne et guident vers l'intérieur les galets de guidage (6), par une butée sur des surfaces latérales de la goulotte de réception (2).

4. Chaîne pour transport d'énergie selon la revendication 1 ou 2, **caractérisée en ce qu'**aux galets de guidage (6) sont associés des dispositifs de réglage fonctionnant de manière électrique ou pneumatique, qui peuvent être actionnés, pendant un mouvement de défilement de la chaîne, par des interrupteurs à contact ou des dispositifs de commutation fonctionnant sans contact.

5. Chaîne pour transport d'énergie selon la revendication 1 ou 2, **caractérisée en ce qu'**aux galets de guidage (6) sont associés des dispositifs de réglage qui sont disposés sur des maillons de chaîne et qui, dans le cas d'une courbure de la chaîne, provoquent un mouvement de réglage, modifiant la largeur de voie (s), de galets de guidage (6) associés.

6. Chaîne pour transport d'énergie selon l'une des revendications 1 à 5, **caractérisée en ce que** les galets de guidage (6) sont raccordés à des fixations qui comportent des éléments de rappel (12).

7. Chaîne pour transport d'énergie selon l'une des revendications 1 à 6, **caractérisée en ce que** les galets de guidage (6) sont disposés sur des axes (13) qui sont guidés de manière coulissante dans des perçages de support des maillons de chaîne à l'encontre de l'action d'un élément de rappel (12).

8. Chaîne pour transport d'énergie selon l'une des revendications 1 à 6, **caractérisée en ce que** les galets de guidage (6) sont disposés sur des bras pivotants qui sont soutenus sur des éléments de rappel (12).

9. Chaîne pour transport d'énergie selon l'une des revendications 1 à 8, **caractérisée en ce que** les surfaces de roulement (7, 6) présentent un profil pour le guidage latéral des galets de guidage (6).

10. Chaîne pour transport d'énergie selon l'une des revendications 1 à 9, **caractérisée en ce que** les galets de guidage (6) présentent des surfaces de support lisses ou profilées en métal ou matière plastique.
